# EUROPÄISCHE PATENTSCHRIFT

(11) **EP 1 953 520 B1**
(45) Veröffentlichungstag und Bekanntmachung des Hinweises auf die Patenterteilung: **30.03.2016**
(21) Anmeldenummer: 08100239.6
(22) Anmeldetag: 09.01.2008
(51) Int. Cl.: G01M 11/06, G01B 11/27

(54) **Verfahren und Vorrichtung zum Ausrichten eines Fahrzeug-Umfeldsensors oder Scheinwerfers**
Method and device for aligning a vehicle surroundings sensor or headlamp
Procédé et dispositif destinés à aligner un capteur d'environnement ou un phare de véhicule

(30) Priorität: 01.02.2007 DE 102007005085
(43) Veröffentlichungstag der Anmeldung: 06.08.2008
(73) Patentinhaber: ROBERT BOSCH GMBH, 70442 Stuttgart (DE)
(72) Erfinder: Nobis, Guenter, 72622, Nuertingen (DE); Uffenkamp, Volker, 71642, Ludwigsburg (DE)

(56) Entgegenhaltungen:
- EP-A- 0 863 413
- EP-A- 1 640 700
- WO-A-2006/057363
- DE-A1- 4 322 917
- DE-A1- 19 745 731
- DE-A1- 19 941 034
- DE-A1-102004 056 400
- JP-A- 63 186 123
- US-A- 5 210 589
- US-A1- 2004 049 930
- US-A1- 2005 041 847

## Beschreibung

Die Erfindung betrifft ein Verfahren und eine Vorrichtung mit einer Kamera und einer Auswerteeinrichtung zum Ausrichten eines Fahrzeug-Umfeldsensors oder Scheinwerfers an einem Fahrzeug.

Aus der DE 199 41 034 A1 ist eine Einstellvorrichtung mit einem Einstellgerät für Scheinwerfer oder für einen Abstandssensor eines Fahrzeuges und mit einer optischen Justiereinrichtung zum Ausrichten des Einstellgerätes relativ zu dem Fahrzeug bekannt. Durch Aufnahme von an dem Fahrzeug angeordneten Merkmalen ist während der Fahrt zu unterschiedlichen Zeitpunkten nach an sich bekannten trigonometrischen Beziehungen die Fahrachsrichtung berechenbar. Dabei sind zwei Kameras verwendet, die mechanisch stabil verbunden sind und die Verbindung ist zu kalibrieren. Des Weiteren ist eine Rückstrahl- oder Projektionswand zum Ausrichten des Scheinwerfers oder des Abstandssensors verwendet.

Die US 2007 / 0 296 961 A1 und die WO 2006/057363 A gehören zu derselben Patentfamilie und betreffen eine Vorrichtung zur Inspektion von Kraftfahrzeuglampen. Ein Hauptrechner dieser Vorrichtung weist ein Anschlusselement auf, das an einem Rechner in dem Kraftfahrzeug anschließbar ist. Wenn das Kraftfahrzeug die Wartungsposition erreicht hat, schaltet der Hauptrechner mittels des Anschlusselementes und des Rechners in dem Kraftfahrzeug die Lampen ein und aus oder lässt diese aufblinken und nimmt mittels der Kameras Bilder auf, um die Kraftfahrzeug Lampen zu überprüfen. Geprüft wird eine Funktion, nicht eine Dejustage der Kraftfahrzeug Lampen nach der Herstellung des betreffenden Kraftfahrzeugs.

Die EP-A-1 640 700 A1 beschreibt ein Verfahren und eine Vorrichtung zur Einstellung von Scheinwerfern an Kraftfahrzeugen unter Verwendung eines Lichtsammelkastens. Eine Energieversorgung weist eine mit dem Lichtsammelkasten verfahrbare Kondensatorbatterie auf. Der Lichtsammelkasten und damit die Kondensatorbatterie sind in eine Ladeposition verfahrbar. Eine Ausrichtung eines zu wartenden Kraftfahrzeugs zu dem Lichtsammelkasten bezüglich einer Fahrachse oder einer Ebenen ist nicht näher erläutert.

Die JP 63 186123 A betrifft eine Vorrichtung zur Einstellung eines Scheinwerferlichtkegels. Um eine Ausdehnung eines auf eine Projektionsfläche geworfenen Scheinwerferlichtkegels auf eine vorgesehene Größe einzustellen, wird ein positionierbarer Spiegel in den Lichtstrahl zwischen dem Scheinwerfer und der Projektionsfläche verbracht. Dazu werden ein zu wartendes Fahrzeug in eine Wartungsposition verbracht und eine Positionierungseinrichtung in eine für diesen Fahrzeugtyp vorgesehene Stellung gebracht. Damit sind Positionierungseinrichtung und Fahrzeug definiert zueinander angeordnet. Wie diese vorgesehene Stellung ermittelt wird, ist nicht näher erläutert.

Die US 2004/049930 A1 beschreibt eine Vorrichtung mit einem bildbearbeitenden Ausrichtgerät und einem Gestell zur Ausrichtung eines Radarsensors. Das bildbearbeitende Ausrichtgerät weist zwei Kameras auf. Das Gestell ist zwischen dem bildbearbeitenden Ausrichtgerät und einem zu wartenden Fahrzeug positionierbar. Eine Bezugsebene ist mittels vier optischer Zielelemente an Rädern des Kraftfahrzeugs und eine Fahrachse mittels zweier optischer Zielelemente an den Hinterrädern des zu wartenden Kraftfahrzeugs bestimmbar. Bilder werden während des Stillstands des Fahrzeugs aufgenommen. Das Gestell weist eine Stange und einen Spiegel auf einem Träger auf. Stange und Spiegel sind zueinander vorjustiert. Mittels zweier optischer Zielelemente an der Stange ist die Stange und damit der Träger des Gestells senkrecht zu der Fahrachse ausrichtbar. Der Spiegel weist an Vorder- und Rückseite eine Spiegelfläche auf. Durch Drehung des Trägers wird der Spiegel gedreht und eine Feineinstellung mittels der beiden optischen Zielelemente an der Stange und eines Lichtstrahles vorgenommen. Zwei Verfahrensschritte zur Justierung des Spiegels sind notwendig.

Die DE 197 45 731 A1 betrifft eine Fahrzeug-Scheinwerfer-Einstellvorrichtung. Als Maß für eine Justierung der Einstellvorrichtung soll die Fahrzeuglängsachse verwendet sein. Diese soll aus der Fahrzeugkontur, insbesondere aus Haltern, die an den Kraftfahrzeugrädern befestigt sind, ableitbar sein. Mittels dieser Halter ist ein Richtstrahler befestigt, der dann parallel zur Längsachse strahlen soll und dem gegenüber der Lichtkasten justierbar sein soll. Fahr- und Karosserieachse und die Anordnung von Halter und Richtstrahler sind nicht näher erläutert.

Die US 2005/041847 A1 beschreibt ein maschinelles Sehsystem zum Ausrichten eines Kraftfahrzeugrades, das ein Kraftfahrzeugwartungsgerät aufweist. Das maschinelle System zum Ausrichten eines Kraftfahrzeugrades weist des Weiteren Kameras und an den Kraftfahrzeugrädern montierbare optische Zielelemente auf, mittels derer unter anderem eine Fahrachse bestimmbar ist. Das Kraftfahrzeugwartungsgerät weist Balken auf, an deren Ende in einer ersten Ausführungsform Kameras angeordnet sind. Diese können die optischen Zielelemente an den Kraftfahrzeugrädern erfassen. Mittels eines Computers, einer Software auf dem Computer und von den Kameras gelieferten Daten sind die Fahrachse und die Ausrichtung des Kraftfahrzeuges, des maschinellen Sehsystems und des Kraftfahrzeugwartungsgerät zueinander bestimmbar. Das dient dazu, einen Radarsensor auszurichten. In einer alternativen Ausführungsform sind optische Zielelemente an den Enden der Balken anstelle der Kameras montierbar.

Die DE 10 2004 056 400 A1 beschreibt ein Verfahren zur Dejustageerkennung eines Abstandssensors. Während der Anfahrt in eine Messposition wird die Fahrlinie messtechnisch erfasst und ein Anstellwinkel bestimmt. Mehrere Alternativen zur Feststellung des Anstellwinkels sind vorgeschlagen. Ein Reflektor an einer feststehenden Wand wird von dem Abstandssensor erfasst und Winkel und Abstand bestimmt. Unter Berücksichtigung des Anstellwinkels ist eine Justage ermöglicht.

Die US-A-5 210 589 betrifft ein Verfahren und eine Vorrichtung zur Kontrolle und gegebenenfalls zur Justage einer optischen Achse eines Kraftfahrzeugscheinwerferlichtbündels. Dazu weist die Vorrichtung einen Bildschirm innerhalb eines Kastens auf. Der Kasten ist mittels eines Verstellmechanik in x- und y-Richtung und der Bildschirm innerhalb des Kastens mittels einer Verschiebemechanik in z-Richtung verschiebbar. Zunächst wird der Kasten so verstellt, dass die optische Achse auf einen zentralen Punkt des Bildschirms ausgerichtet ist. Als nächstes wird der Bildschirm in z-Richtung verschoben. Die Abweichung aus dem Mittelpunkt definiert eine Abweichung der optischen Achse. Dann wird mittels einer Kamera, der Verstellmechanik, eines Rechners und eines Rechnerprogramms die Abweichung kalkuliert und eine Justage vorgenommen.

Die DE 43 22 917 A1 beschreibt ein Scheinwerferprüfsystem mit zumindest einer Projektionsfläche, auf die ein Scheinwerferlichtbündel eines Kraftfahrzeugs projizierbar ist. Ein Bild der Projektionswand wird in einer ersten Videokamera abgebildet und digitalisiert. Ein Bild der Kraftfahrzeugscheinwerfer wird in einer zweiten Videokamera abgebildet und ebenfalls digitalisiert. Digitalisierte Daten beider Videokameras werden verarbeitet, Zusammenhänge hergestellt und eine optische Achse des Scheinwerferlichtbündels wird gegebenenfalls korrigiert.

Die EP-A-0 863 413 betrifft ein Verfahren zum räumlichen Lokalisieren eines Marken tragenden Objektes. Positionen von Spuren der Marken auf einem durch eine Bildaufnahmeeinrichtung erstellten Bild werden bestimmt und dann werden ausgehend von den Positionen der Marken auf dem Bild die Positionen der Marken in Bezug auf die Bildaufnahmeeinrichtung im Raum bestimmt. Das Verfahren umfasst einen Schritt zur Verbesserung der Bestimmung von Positionen der Spuren auf dem Bild, indem ein Modell für die Spuren durch vorgebbare Funktionen, die geometrische Formen beschreiben, erstellt wird. Die Positionen werden von denjenigen Funktionen kalkuliert, welche die beste Übereinstimmung mit den Spuren ergeben. Die Übereinstimmung wird berechnet, indem eine Lichtstärkendifferenz auf dem Bild zwischen der Spur und der Formfunktion, die eine Gauss-Funktion der Lichtstärke mit variablen Parametern umfasst, minimiert wird.

Der Erfindung liegt die Aufgabe zugrunde, ein einfaches Verfahren und eine einfache Vorrichtung zum Ausrichten von Fahrzeug-Umfeldsensoren, beispielsweise des Abstandssensors oder von Scheinwerfern anzugeben.

Diese Aufgabe wird mit den Merkmalen der Hauptansprüche gelöst. Die Erfindung weist folgende Verfahrensschritte und Merkmale auf: Ein Messplatz mit Fahrbahnebene wird mit mindestens drei am Messplatz angeordneten Messpunkten eines Passpunktsystems vorgegeben, die Position und Lage der Kamera im Messplatz wird anhand der Messpunkte des Passpunktsystems ermittelt, eine Fahrachse des Fahrzeugs wird mittels der Kamera und mindestens eines Messpunktes an dem Fahrzeug während einer Anfahrt durch Aufnahme mehrerer Bilder ermittelt, eine Justage-Hilfseinrichtung vor dem Fahrzeug-Umfeldsensor oder Scheinwerfer des Fahrzeugs wird mittels der Kamera und mindestens dreier Messpunkte eines Passpunktsystems an der Justage-Hilfseinrichtung bezüglich der Fahrachse und der Fahrbahnebene ausgerichtet, eine Ausrichtung des Fahrzeug-Umfeldsensors oder Scheinwerfers zur Justage-Hilfseinrichtung wird ermittelt und der Fahrzeug-Umfeldsensor oder Scheinwerfer wird bei Vorliegen einer Fehlausrichtung ausgerichtet.

Erfindungsgemäss sind Koordinaten eines Messplatzes und damit einer Fahrbahnebene mittels mindestens dreier Messpunkte ermittelbar. Die drei Messpunkte bilden ein Passpunktsystem. Ist ein solches Passpunktsystem, auch als Passpunktfeld bezeichnet, am Messplatz angeordnet und sind Koordinaten des Passpunktfeldes bezüglich der Fahrbahnebene bekannt, so sind Koordinaten der Fahrbahnebene ermittelbar. Die Messpunke werden auch als Passpunkte bezeichnet. Für ein solches Passpunktfeld gilt die Randbedingung, dass die drei Passpunkte nicht auf einer Geraden liegen dürfen. Zweckmäßigerweise spannen die drei Passpunkte ein möglichst großes Dreieck auf, bei mehr als drei Passpunkten wird ein möglichst großes Vieleck aufgespannt. Bei mehr als drei Passpunkten ist es zudem vorteilhaft, die Passpunkte des Passpunkfeldes räumlich, also dreidimensional anzuordnen.

Durch das Passpunktsystem ist ein Messplatz-Koordinatensystem definiert und die Kameraposition und -ausrichtung relativ zum Messplatzsystem vor oder während des Mess- und Justagevorgangs ermittelbar. Dadurch kann die Vorrichtung mit der Kamera an mehreren Messplätzen eingesetzt werden. Als weiterer Vorteil ergibt sich, dass auch nach Aufnahme des Verfahrens kontinuierlich die Position und Lage der Kamera bestimmbar ist, so lange die Kamera die drei Messpunkte am Messplatz sieht. Allfällige Vibrationen, hervorgerufen durch Arbeiten in der Umgebung des Messplatzes, sind kompensierbar. Damit ist die Messgenauigkeit auch bei mobiler Vorrichtung gewährleistet, auch wenn die Vorrichtung nur mäßig stabil am Messplatz befestigt ist, insbesondere dann, wenn die Kamera auf einem Stativ angeordnet ist.

Die Koordinaten der Fahrbahnebene dienen als Grundlage für ein FahrzeugKoordinatensystem. Die Fahrachse wird dann während der Anfahrt innerhalb der Fahrbahnebene ermittelt. Dann bilden die Fahrbahnebene und die Fahrachse das Fahrzeugkoordinatensystem. Mit den Koordinaten der Fahrbahnebenen und der bekannten Fahrachse ist eine Dejustage des Abstandssensors feststellbar und durch entsprechende Justage kompensierbar.

Die Erfassung einer dreidimensionalen Ausrichtung der Rückstrahlplatte mit nur einer Kamera ist möglich, wenn mindestens drei Messpunkte an der Rückstrahlplatte vorhanden sind, deren dreidimensionale Koordinaten untereinander und zum Normalenvektor der Reflexionsebene in einem lokalen Koordinatensystem bekannt sind. Die Messpunkte bilden dann ein Passpunktsystem. Die mindestens drei Passpunkte dürfen nicht auf einer Geraden liegen. Zweckmäßigerweise spannen sie ein möglichst großes Dreieck auf. Sind mehr als drei Punkte vorhanden, ist es sinnvoll, dem Punktfeld eine räumliche Ausprägung zu geben.

Die Rückstrahlplatte wird im Fahrzeugkoordinatensystem anhand der drei Messpunkte so justiert, dass die Reflexionsrichtung parallel der Fahrachse und parallel zur Fahrbahnebene ausgerichtet ist. Die Rückstrahlplatte, auch als Reflektor bezeichnet, reflektiert Radarsignale. Die Radarsignale werden vom Abstandssensor ausgestrahlt und die reflektierten Signale von einem Empfänger des Sensors wieder empfangen. Die Radarsignale werden als Radarsignalkeule mit einer maximalen Stärke in der Keulenmitte ausgestrahlt. Wird die Radarsignalstrahlung der Keulenmitte parallel der Fahrtrichtung und der Fahrbahnebene ausgesandt, und an der justierten Rückstrahlplatte reflektiert, so wird die Radarsignalstrahlung an dem Reflektor in sich selbst reflektiert und die Stärke der empfangenen Signale erreicht ein Maximum. Anhand der Stärke der empfangenen Signale kann eine Dejustage ermittelt werden. Die Justage ist hinsichtlich eines Nick-, Gier- und Wankwinkels durchführbar. Bei einem Sensor mit kegelförmiger Abstrahlung sind lediglich der Nick- und der Gierwinkel einzustellen, das Verfahren ist jedoch auf alle Winkel gleichermaßen anwendbar.

Durch Aufnahme mehrerer Bilder mittels der Kamera und Auswertung einer Bewegungsbahn mindestens eines Messpunktes an dem Fahrzeug ist die Fahrachse ermittelbar. Die Fahrachse wird als Vektor in der Fahrbahnebene bestimmt. Die Fahrbahnebene und eine Position und eine Lage der Kamera sind vor Aufnahme des Verfahrens zueinander kalibriert.

Die Fahrachse ergibt sich aus der Verbindung von mindestens zwei Schnittpunkten des optischen Abbildungsstrahls des auf dem Bildsensor abgebildeten Fahrzeug-Messpunktes mit der Fahrbahnebene aus mindestens zwei Bildern während der Anfahrt. Vorteilhaft wird die Fahrachse als ausgleichende Gerade mittels statistischen Auswerteverfahren bestimmt.

Bei mehr als zwei Bildern während der Anfahrt kann eine Analyse der Geradlinigkeit der Fahrachse zur Überwachung des Messvorganges verwendet werden. Wird eine Kurvenfahrt erkannt, können entweder die Messdaten korrigiert werden oder der Anwender wird aufgefordert, die Messung zu wiederholen.

Fährt das Fahrzeug mit konstanter Geschwindigkeit auf einer ebenen Fahrbahn und erfolgt die Bildaufzeichnung mit konstanter Frequenz, ergeben sich Schnittpunkte mit einer ebenen Fahrbahn mit gleichem Abstand zueinander. Wenn die Messpunktabstände voneinander abweichen, wird eine Unebenheit der Fahrbahn erkennbar. Wird eine Fahrbahnunebenheit erkannt, können entweder die Messdaten korrigiert werden oder der Anwender wird aufgefordert, die Messung an einem anderen Messplatz zu wiederholen.

Die Bildkoordinaten der auf dem Bildsensor abgebildeten Messpunkte werden durch an sich bekannte Methoden der Bildanalyse ermittelt. Dies betrifft sowohl die künstlichen Merkmale als auch vorhandenen Merkmale. Die Bildanalyse stützt sich auf die Erkennung zum Beispiel von Kanten, Mustern, Grauwerten oder Grauwertgradienten. In einem einfachen Beispiel ergeben sich die Bildkoordinaten eines kreisförmigen Messpunktes aus dem Schwerpunkt der Grauwerte seiner Abbildung auf dem Bildsensor.

In einer ersten Variante ist die Justage-Hilfseinrichtung beweglich, das Fahrzeug fährt auf den Messplatz und die Justage-Hilfseinrichtung fährt vor das Fahrzeug. Nach Dejustagekompensation fährt die Justage-Hilfseinrichtung beiseite und das Fahrzeug verlässt den Messplatz in Vorwärtsfahrt. In einer zweiten Variante ist die ausrichtbare Justage-Hilfseinrichtung ortsfest und das Fahrzeug fährt vor die Justage-Hilfseinrichtung und verlässt den Messplatz durch Rückwärtsfahrt.

Die Messpunkte sind messbare Punkte. Als Messpunkte sind an dem Fahrzeug, Messplatz oder Rückstrahlplatte vorhandene oder künstlich angeordnete Merkmale verwendbar. Die vorzugsweise künstlich aufgebrachten Merkmale weisen eine geometrische Figur mit einem guten Kontrast zu der Umgebung auf. Geeignet sind runde, dreiecksförmige oder quadratische Merkmale. Die Merkmale können auch als Körper, zum Beispiel als Kugel, Kegel oder Zylinder ausgebildet sein.

Ist das Passpunktsystem für die Fahrbahnebene auf einem mobilen Träger angeordnet, so ist die Vorrichtung aus Kamera und Auswerteeinrichtung nicht an einen einzelnen Messplatz gebunden, sondern ist für verschiedene Fahrbahnebenen verwendbar. Dabei sind die Koordinaten der Merkmale untereinander und bezüglich von Aufstandspunkten des Trägers auf der Fahrbahnebene in einem lokalen Passpunktsystem bekannt.

Zur Verbesserung der Reproduzierbarkeit ist es vorteilhaft, am Messplatz Mittel vorzusehen, die eine eindeutige Positionierung der drei Aufstandpunkte des mobilen Trägers an jedem der Messplätze gewährleisten. Als derartige Mittel können Markierungen oder formschlüssige Arretierungen in vertauschungssicherer Anordnung verwendet werden.

Ist die relative Kameraposition und -ausrichtung im Messplatzsystem bestimmt, kann der mobile Träger entfernt werden. Ebenso ist nicht erforderlich, dass die Merkmale des Passpunktsystems auf der Fahrbahn kontinuierlich sichtbar bleiben. Sie können durch das Fahrzeug oder die Justage-Hilfseinrichtung, die hier als Rückstrahlplatte ausgebildet ist, teilweise oder ganz verdeckt werden. In diesen Fällen darf die Kameraposition zumindest während des einen Mess- und Justageprozesses nicht verändert werden.

In einfacher Weise weist die Auswerteeinrichtung eine Anzeigeeinheit auf. Dann sind notwendige Justageschritte auf dem Anzeigeeinheit darstellbar. Insbesondere sind Anweisungen für Justageschrauben des Abstandssensors darstellbar.

In einfacher Weise steuert die Auswerteeinrichtung einen Montageroboter zur Ausrichtung der Justage-Hilfseinrichtung, insbesondere der Rückstrahlplatte. Die Rückstrahlplatte wird so ausgerichtet, dass der Normalenvektor der Rückstrahlplatte parallel zu der Fahrachse und zur Fahrbahnebene liegt.

In einfacher Weise steuert die Auswerteeinrichtung einen Montageroboter zur Ausrichtung des Abstandssensors. Der Montageroboter wirkt direkt auf Justierschrauben des Abstandssensors ein und kompensiert eine Dejustage dieses Abstandssensors. Es ist möglich, für die Ausrichtung des Abstandssensors und der Justage-Hilfseinrichtung denselben Montageroboter zu verwenden. Alternativ dazu ist die Justage-Hilfseinrichtung auf ein Fahrgestell aufgesetzt, dass von der Auswerteeinrichtung ansteuerbar ist und die Justage-Hilfseinrichtung über den Messplatz verfährt und bezüglich der Fahrachse und der Fahrebene ausrichtet.

Das Verfahren und die Vorrichtung sind entsprechend auch für die Justage weiterer Fahrzeug-Umfeldsensoren und Scheinwerfer einsetzbar. Als sogenannte Justage-Hilfseinrichtung ist anstelle der Rückstrahlplatte eine optische Kalibriertafel für bildgebende Sensoren in oder an einem Fahrzeug, eine Lichtverteilung von Scheinwerfer erfassende Einrichtung, eine oder mehrere Reflektorplatten für Nahfeld-Radarsensoren oder Ultraschallsensoren einsetzbar. Damit wird gewährleistet, dass die Abstrahlrichtung immer zu der Fahrtrichtung und der Fahrbahnebene ausgerichtet ist.

Aufgrund nicht zu vernachlässigbarer Toleranzen im Fahrzeugbau ist das Verfahren damit eine gute Möglichkeit zur Justage, entweder automatisiert in der Fertigung oder manuell in der Werkstatt. Sowohl die Sensor-, und Scheinwerferfertigung als auch die Fahrzeugfertigung unterliegen komplexen Prozessen, so dass auch unter optimalen Bedingungen eine Kette von Toleranzen entsteht, die zu einer nicht vernachlässigbaren Abweichung der Abstrahlrichtung von der konstruktiv geplanten Richtung führen kann. Eine Überprüfung und gegebenenfalls eine Justage ist damit unerlässlich. In der Werkstatt ist nach durchgeführten Karosserie- und/oder Fahrwerksreparaturen eine Überprüfung der Abstrahlrichtung und gegebenenfalls eine Justage zwingend notwendig.

Zum besseren Verständnis der Erfindung ist nachfolgend ein Ausführungsbeispiel mit einem Abstandssensor beispielhaft als Fahrzeug-Umfeldsensor und einer Rückstrahlpatte beispielhaft für eine Justage-Hilfseinrichtung anhand der Zeichnung näher erläutert.

Es zeigen
- Fig. 1: eine Vorrichtung mit einer Kamera und einer Auswerteeinrichtung zum Ausrichten eines Abstandssensors an einem Fahrzeug auf einem Messplatz mittels einer zwischen dem Fahrzeug und der Kamera angeordneten ein Passpunktsystem aufweisenden Rückstrahlplatte in perspektivischer Darstellung und
- Fig. 2: ein Passpunktsystem abgebildet auf einem Bildsensor einer Kamera in schematischer Darstellung.

In den verschiedenen Figuren sind ähnliche oder dieselben Elemente durch gleiche Bezugszeichen bezeichnet.

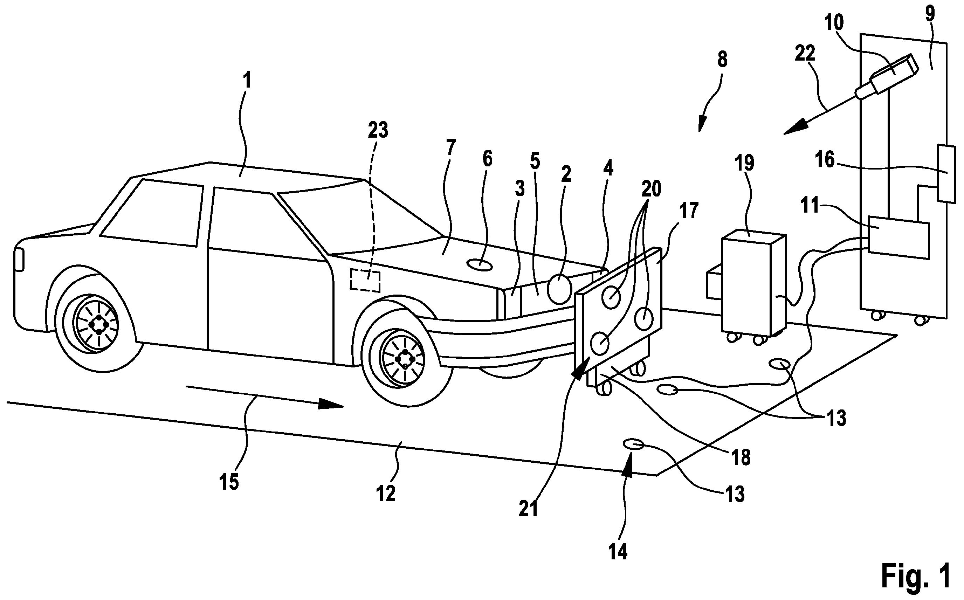

Figur 1 zeigt ein Fahrzeug 1 mit einem Abstandssensor 2 und zwei Scheinwerfern 3 und 4 in einem Frontbereich 5 und einem Messpunkt 6 auf der Motorhaube 7. Das Fahrzeug 1 steht auf einem Messplatz 8. Der Messplatz 8 weist eine Vorrichtung 9 mit einer zum Messplatz 8 zugeordneten Kamera 10 und einer Auswerteeinrichtung 11 auf. Auf einer Fahrbahnebene 12 des Messplatzes 8 sind Messpunkte 13 eines Passpunktsystems 14 angeordnet. Die Messpunkte 13 sind von der mobilen Kamera 10 erfassbar. Mittels der Messpunkte 13 sind die Kamera 10 und die Fahrbahnebene 12 einander zugeordnet. Der Messplatz 8 mit der Fahrbahnebene 12 ist somit der Auswerteeinrichtung 11 bekannt. Während einer Anfahrt des Fahrzeugs 1 auf den Messplatz 8 ist von der Kamera 10 eine Bewegungsbahn des Messpunktes 6 aufgezeichnet und daraus in der Auswerteeinrichtung 11 eine Fahrachse 15 bestimmt. Die Auswerteeinrichtung 11 steuert eine Anzeigeeinheit 16 an, auf der notwendige Verfahrensschritte darstellbar sind. Zwischen der Kamera 10 und dem Fahrzeug 1 ist eine Rückstrahlplatte 17 angeordnet. Die Rückstrahlplatte 17 sitzt auf einem Fahrgestell 18 auf, das von der Auswerteeinrichtung 11 ansteuerbar ist. Das Fahrgestell 18 ist als Roboter ausgebildet und in der Lage, die aufgesetzte Rückstrahlplatte 17 zu bewegen und auszurichten. Dazu weist die Rückstrahlplatte 17 drei Messpunkte 20 eines Passpunktsystems 21 auf, die von der Kamera 10 erfassbar sind. Die Kamera 10 weist eine optische z-Achse 22 auf. Mittels der Kamera 10, der Auswerteeinrichtung 11, des Fahrgestells 18 und der drei Messpunkte 20 ist die Rückstrahlplatte 17 senkrecht auf die Fahrachse 15 und Fahrbahnebene 12 ausrichtbar. Ein Empfänger des Abstrahlsensors 2 erkennt das reflektierte Signal und gibt über eine in dem Kraftfahrzeug 1 angeordnete Auswerteeinrichtung 23 Justagehinweise aus. Vorzugsweise kommuniziert die Auswerteeinrichtung 23 des Kraftfahrzeugs 1 mit der Auswerteeinrichtung 11 der Vorrichtung 9, so dass Justageinformationen für einen Servicetechniker in der Anzeigeeinheit 16 darstellbar sind oder ein Montageroboter 19 auf die Justierschrauben des Abstandssensors 2 einwirkt und den Abstandssensor 2 ausrichtet und damit eine Dejustage kompensiert.

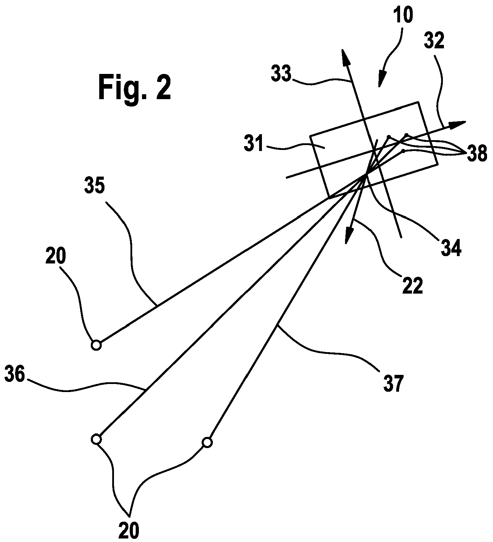

Figur 2 zeigt einen ebenen Bildsensor 31 der Kamera 10. Der Bildsensor 31 weist eine x- Achse 32, eine y-Achse 33 und die optische z-Achse 22 auf. In einem Projektionszentrum 34 bündeln sich Abbildungsstrahlen 35 - 37, mit deren Hilfe sich die Messpunkte 20 des Passpunktsystems 21 auf den Bildsensor 31 als Bildpunkte 38 abbilden lassen. Aufgrund der Lage der Bildpunkte 38 auf dem Sensor 31 lässt sich anhand trigonometrischer Funktionen der Normalenvektor der Rückstrahlplatte 17 berechnen.

## Patentansprüche

1. Verfahren zum Ausrichten eines Fahrzeug-Umfeldsensors (2) oder Scheinwerfers (3, 4) an einem Fahrzeug (1) mittels einer Vorrichtung (9), die eine Kamera (10) und eine Auswerteeinrichtung (11) aufweist, mit folgenden Verfahrensschritten:
ein Messplatz (8) mit Fahrbahnebene (12) wird mit mindestens drei am Messplatz angeordneten Messpunkten (13) eines Passpunktsystems (14) vorgegeben, wobei die drei Messpunkte (13) des Passpunktsystems (14) nicht auf einer Geraden liegen dürfen,
die Position und Lage der Kamera (10) im Messplatz (8) wird anhand der Messpunkte (13) des Passpunktsystems (14) ermittelt,
eine Fahrachse (15) des Fahrzeugs (1) wird mittels der Kamera (10) und mindestens eines Messpunktes (6) an dem Fahrzeug (1) während einer Anfahrt durch Aufnahme mehrerer Bilder ermittelt,
eine Justage-Hilfseinrichtung (17) vor dem Fahrzeug-Umfeldsensor (2) oder Scheinwerfer (3, 4) des Fahrzeugs (1) wird mittels der Kamera (10) und mindestens dreier Messpunkte (20) eines Passpunktsystems (21) an der Justage-Hilfseinrichtung (17) bezüglich der Fahrachse (15) und der Fahrbahnebene (12) ausgerichtet, wobei die drei Messpunkte (20) des Passpunktsystems (21) nicht auf einer Geraden liegen dürfen,
eine Ausrichtung des Fahrzeug-Umfeldsensors (2) oder Scheinwerfers (3, 4) zur Justage-Hilfseinrichtung (17) wird ermittelt und
der Fahrzeug-Umfeldsensor (2) oder Scheinwerfer (3, 4) wird bei Vorliegen einer Fehlausrichtung ausgerichtet.

2. Verfahren nach Anspruch 1, **dadurch gekennzeichnet, dass** die Justage-Hilfseinrichtung (17) vor dem Fahrzeug Umfeldsensor (2) oder Scheinwerfer (3, 4) platzierbar ist.

3. Verfahren nach Anspruch 1, **dadurch gekennzeichnet, dass** als Messpunkte (6, 13 und 20) künstlich angeordnete Merkmale verwendet sind.

4. Verfahren nach Anspruch 1, **dadurch gekennzeichnet, dass** die drei Messpunkte (13) für den Messplatz (8) auf einem mobilen Träger angeordnet sind.

5. Verfahren nach einem der vorhergehenden Ansprüche, **dadurch gekennzeichnet, dass** der Messplatz (8) Mittel aufweist, die eine eindeutige Positionierung des mobilen Trägers gewährleisten.

6. Verfahren nach Anspruch 5, **dadurch gekennzeichnet, dass** die Mittel formschlüssige Arretierungen in vertauschungssicherer Anordnung aufweisen.

7. Verfahren nach Anspruch 1, **dadurch gekennzeichnet, dass** die Vorrichtung (9) eine Anzeigeeinheit (16) aufweist.

8. Verfahren nach Anspruch 1, **dadurch gekennzeichnet, dass** die Auswerteeinrichtung (11) der Vorrichtung (9) mit einer zweiten Auswerteeinrichtung (23) des Fahrzeugs (1) kommuniziert.

9. Verfahren nach Anspruch 1, **dadurch gekennzeichnet, dass** die Auswerteeinrichtung (11) einen Montageroboter (19) zur Ausrichtung der Justage-Hilfseinrichtung (17) steuert.

10. Verfahren nach Anspruch 1, **dadurch gekennzeichnet, dass** die Auswerteeinrichtung (11) ein Fahrgestell (18) der Justage-Hilfseinrichtung (17) steuert, mittels dessen die Justage-Hilfseinrichtung (17) verfahrbar und ausrichtbar ist.

11. Verfahren nach Anspruch 1, **dadurch gekennzeichnet, dass** die Auswerteeinrichtung (11) einen Montageroboter (19) zur Ausrichtung des Fahrzeug-Umfeldsensors (2) oder Scheinwerfers (3 und 4) steuert.

12. Vorrichtung (9) mit einer Kamera (10) und einer Auswerteeinrichtung (11) zum Ausrichten eines Fahrzeug-Umfeldsensors (2) oder Scheinwerfers (3 und 4) an einem Fahrzeug (1), wobei ein Messplatz (8) mit Fahrbahnebene (12) mit mindestens drei am Messplatz angeordneten Messpunkten (13) eines Passpunktsystems (14) vorgebbar ist, wobei die drei Messpunkte (13) des Passpunktsystems (14) nicht auf einer Geraden liegen dürfen, wobei die Auswerteeinrichtung (11) ausgelegt ist, um die Position und Lage der Kamera (10) im Messplatz anhand der Messpunkte (13) des Passpunktsystems (14) zu ermitteln, eine Fahrachse (15) des Fahrzeugs (1) mittels der Kamera (10) und mindestens eines Messpunktes (6) an dem Fahrzeug (1) während einer Anfahrt durch Aufnahme mehrerer Bilder zu ermitteln, eine Justage-Hilfseinrichtung (17) vordem Fahrzeug-Umfeldsensor (2) oder Scheinwerfer (3, 4) des Fahrzeugs (1) mittels der Kamera (10) und mindestens dreier Messpunkte (20) eines Passpunktsystems (21) an der Justage-Hilfseinrichtung (17) bezüglich der Fahrachse (15) und der Fahrbahnebene (12) auszurichten, wobei die drei Messpunkte (20) des Passpunktsystems (21) nicht auf einer Gerade liegen dürfen, eine Ausrichtung des Fahrzeug-Umfeldsensors (2) oder Scheinwerfers (3, 4) zur Justage-Hilfseinrichtung zu ermitteln, um den Fahrzeug-Umfeldsensor (2) oder Scheinwerfer (3, 4) beim Vorliegen einer Fehlausrichtung auszurichten.

## Claims

1. Method for aligning a vehicle surroundings sensor (2) or a headlamp (3, 4) on a vehicle (1) by means of a device (9) which has a camera (10) and an evaluation apparatus (11), comprising the following steps:
a measuring station (8) with a roadway plane (12) with at least three measuring points (13), arranged on the measuring station, of a control point system (14) is predefined, wherein the three measuring points (13) of the control point system (14) must not lie on a straight line,
the position and orientation of the camera (10) in the measuring station (8) is determined on the basis of the measuring points (13) of the control point system (14),
a driving axis (15) of the vehicle (1) is determined by means of the camera (10) and at least one measuring point (6) on the vehicle (1) is determined during driving off by recording a plurality of images,
an auxiliary adjustment apparatus (17) ahead of the vehicle surroundings sensor (2) or headlamp (3, 4) of the vehicle (1) is aligned by means of the camera (10) and at least three measuring points (20) of a control point system (21) on the auxiliary adjustment apparatus (17) with the driving axis (15) and the roadway plane (12), wherein the three measuring points (20) of the control point system (20) must not lie on a straight line,
an alignment of the vehicle surroundings sensor (2) or headlamp (3, 4) with respect to the auxiliary adjustment apparatus (17) is determined, and
the vehicle surroundings sensor (2) or headlamp (3, 4) is aligned in the event of an incorrect alignment.

2. Method according to Claim 1, **characterized in that** the auxiliary adjustment apparatus (17) can be positioned in front of the vehicle surroundings sensor (2) or a headlamp (3, 4).

3. Method according to Claim 1, **characterized in that** artificially arranged features are used as measuring points (6, 13 and 20).

4. Method according to Claim 1, **characterized in that** the three measuring points (13) for the measuring station (8) are arranged on a mobile carrier.

5. Method according to one of the preceding claims, **characterized in that** the measuring station (8) has means which ensure unambiguous positioning of the mobile carrier.

6. Method according to Claim 5, **characterized in that** the means have positively engaging locking devices in a non-interchangeable arrangement.

7. Method according to Claim 1, **characterized in that** the device (9) has a display unit (16).

8. Method according to Claim 1, **characterized in that** the evaluation apparatus (11) of the device (9) communicates with a second evaluation apparatus (23) of the vehicle (1).

9. Method according to Claim 1, **characterized in that** the evaluation apparatus (11) controls an assembly robot (19) for aligning the auxiliary adjustment apparatus (17).

10. Method according to Claim 1, **characterized in that** the evaluation apparatus (11) controls an undercarriage (18) of the auxiliary adjustment apparatus (17), by means of which undercarriage (18) the auxiliary adjustment apparatus (17) can be moved and aligned.

11. Method according to Claim 1, **characterized in that** the evaluation apparatus (11) controls an assembly robot (19) in order to align the vehicle surroundings sensor (2) or headlamp (3 and 4).

12. Device (9) having a camera (10) and an evaluation apparatus (11) for aligning a vehicle surroundings sensor (2) or headlamp (3 and 4) on a vehicle (1), wherein a measuring station (8) with a roadway plane (12) with at least three measuring points (13), arranged on the measuring station, of a control point system (14) can be predefined, wherein the three measuring points (13) of the control point system (14) must not lie in a straight line, wherein the evaluation apparatus (11) is designed to determine the position and orientation of the camera (10) in the measuring station on the basis of the measuring points (13) of the control point system (14), to determine a driving axis (15) of the vehicle (1) by means of the camera (10) and at least one measuring point (6) on the vehicle (1) during driving off by recording a plurality of images, to align an auxiliary adjustment apparatus (17) in front of the vehicle surroundings sensor (2) or headlamp (3, 4) of the vehicle (1) by means of the camera (10) and at least three measuring points (20) of a control point system (21) on the auxiliary adjustment apparatus (17) with the driving axis (15) and the roadway plane (12), wherein the three measuring points (20) of the control point system (21) must not lie in a straight line, to determine an alignment of the vehicle surroundings sensor (2) or a headlamp (3, 4) with respect to the auxiliary adjustment apparatus, in order to align the vehicle surroundings sensor (2) or headlamp (3, 4) when an incorrect alignment is present.

## Revendications

1. Procédé pour orienter un capteur (2) d'environnement d'un véhicule ou un phare (3, 4) prévu sur un véhicule (1) au moyen d'un ensemble (9) qui présente une caméra (10) et un dispositif d'évaluation (11), le procédé présentant les étapes suivantes :
un emplacement de mesure (8) présentant un plan (12) de chaussée est prédéterminé, au moins trois points de mesure (13) étant disposés sur l'emplacement de mesure d'un système (14) de points d'adaptation, les trois points de mesure (13) du système (14) de points d'adaptation ne pouvant être colinéaires,
la position et l'emplacement de la caméra (10) sur l'emplacement de mesure (8) est déterminée à l'aide des points de mesure (13) du système (14) de points d'adaptation,
pendant un démarrage, un axe de déplacement (15) du véhicule (1) est déterminé au moyen de la caméra (10) et d'au moins un point de mesure (6) sur le véhicule (1) par enregistrement de plusieurs images,
un dispositif auxiliaire d'ajustement (17) situé en avant du capteur (2) d'environnement du véhicule ou des phares (3, 4) du véhicule (1) est aligné au moyen de la caméra (10) et d'au moins trois points de mesure (20) d'un système (21) de points d'adaptation sur le dispositif auxiliaire d'ajustement (17) par rapport à l'axe de déplacement (15) et au plan (12) de la chaussée, les trois points de mesure (20) du système (21) de points d'adaptation ne pouvant être colinéaires,
l'orientation du capteur (2) d'environnement du véhicule ou des phares (3, 4) par rapport au dispositif auxiliaire d'ajustement (17) est déterminée et
au cas où l'orientation est erronée, le capteur (2) d'environnement du véhicule ou les phares (3, 4) sont orientés.

2. Procédé selon la revendication 1, **caractérisé en ce que** le dispositif auxiliaire d'ajustement (17) peut être placé en avant du capteur (2) d'environnement du véhicule ou des phares (3, 4).

3. Procédé selon la revendication 1, **caractérisé en ce que** des caractéristiques disposées artificiellement sont utilisées comme points de mesure (6, 13 et 20).

4. Procédé selon la revendication 1, **caractérisé en ce que** les trois points de mesure (13) de l'emplacement de mesure (8) sont disposés sur un support mobile.

5. Procédé selon l'une des revendications précédentes, **caractérisé en ce que** l'emplacement de mesure (8) présente des moyens qui garantissent un positionnement non ambigu du support mobile.

6. Procédé selon la revendication 5, **caractérisé en ce que** les moyens présentent des blocages en correspondance géométrique disposés de manière à ne pouvoir pas être confondus.

7. Procédé selon la revendication 1, **caractérisé en ce que** l'ensemble (9) présente une unité d'affichage (16).

8. Procédé selon la revendication 1, **caractérisé en ce que** le dispositif d'évaluation (11) de l'ensemble (9) communique avec un deuxième dispositif d'évaluation (23) du véhicule (1).

9. Procédé selon la revendication 1, **caractérisé en ce que** le dispositif d'évaluation (11) commande un robot de montage (19) qui oriente le dispositif auxiliaire d'ajustement (17).

10. Procédé selon la revendication 1, **caractérisé en ce que** le dispositif d'évaluation (11) commande un bâti de déplacement (18) du dispositif auxiliaire d'ajustement (17), au moyen duquel le dispositif auxiliaire d'ajustement (17) peut être déplacé et orienté.

11. Procédé selon la revendication 1, **caractérisé en ce que** le dispositif d'évaluation (11) commande un robot de montage (19) qui oriente le capteur (2) d'environnement du véhicule ou les phares (3 et 4).

12. Ensemble (9) doté d'une caméra (10) et d'un dispositif d'évaluation (11) pour orienter un capteur (2) d'environnement de véhicule ou des phares (3 et 4) sur un véhicule (1),
un emplacement de mesure (8) doté d'un plan de chaussée (12) présentant au moins trois points de mesure (13), disposés sur l'emplacement de mesure, d'un système (14) de points d'adaptation pouvant être prédéterminé, les trois points de mesure (13) du système (14) de points d'adaptation ne pouvant être colinéaires,
le dispositif d'évaluation (11) étant conçu
pour déterminer la position et l'emplacement de la caméra (10) dans l'emplacement de mesure à l'aide des points de mesure (13) du système (14) de points d'adaptation, pour déterminer un axe de déplacement (15) du véhicule (1) au moyen de la caméra (10) et d'au moins un point de mesure (6) sur le véhicule (1) pendant un démarrage par enregistrement de plusieurs images,
pour aligner un dispositif auxiliaire d'ajustement (17) disposé en avant du capteur (2) d'environnement du véhicule ou des phares (3, 4) du véhicule (1) au moyen de la caméra (10) et d'au moins trois points de mesure (20) d'un système (21) de points d'adaptation sur le dispositif auxiliaire d'ajustement (17) par rapport à l'axe de déplacement (15) et du plan (12) de la chaussée, les trois points de mesure (20) du système (21) de points d'adaptation ne pouvant être colinéaires,
pour déterminer l'orientation du capteur (2) d'environnement du véhicule ou des phares (3, 4) par rapport au dispositif auxiliaire d'ajustement et
pour orienter le capteur (2) d'environnement du véhicule ou les phares (3, 4) au cas où l'orientation est eronée.
